(19) Europäisches Patentamt
European Patent Office
Office européen des brevets

(11) **EP 4 632 636 A1**

(12) **EUROPEAN PATENT APPLICATION**

(43) Date of publication:
**15.10.2025 Bulletin 2025/42**

(21) Application number: 25155603.1

(22) Date of filing: **03.02.2025**

(51) International Patent Classification (IPC):
**G06N 10/60** (2022.01)      **G06N 10/20** (2022.01)

(52) Cooperative Patent Classification (CPC):
**G06N 10/60; G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2024 JP 2024064732**

(71) Applicant: FUJITSU LIMITED
**Kawasaki-shi, Kanagawa 211-8588 (JP)**

(72) Inventors:
• KISHI, Kaito
**Kawasaki-shi, 211-8588 (JP)**
• YAMAGUCHI, Jumpei
**Kawasaki-shi, 211-8588 (JP)**
• IZU, Tetsuya
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING SYSTEM**

(57)      An information processing program for causing a computer to execute: determining a number of control qubits using a relationship between a first arithmetic operation time for each of multiple kinds of modular exponentiation calculation processing in an arithmetic operation of prime factorization and a second arithmetic operation time for each of a plurality of measurement and classical conditional arithmetic operations in inverse quantum Fourier transform processing on results of the multiple kinds of modular exponentiation calculation processing in the arithmetic operation of the prime factorization; determining a circuit pattern for performing the arithmetic operation of the prime factorization by execut- ing the multiple kinds of modular exponentiation calculation processing and the inverse quantum Fourier transform processing, based on the number of control qubits; generating a quantum circuit using the circuit pattern; and performing the arithmetic operation of the prime factorization by using the quantum circuit.

FIG. 7

EP 4 632 636 A1

**Description**

FIELD

The embodiments discussed herein are related to an information processing program, an information processing method, and an information processing system.

BACKGROUND

Encryption of data is effective as a technical approach for securing security of data distribution. While there are various methods for encrypting data, encryption using difficulty of prime factorization is widely used. As a high-speed quantum algorithm for solving the prime factorization, there is a Shor's algorithm using a quantum computer.

In the Shor's algorithm, a quantum circuit of a quantum algorithm that performs quantum calculation using qubits and performs prime factorization of an integer as a target is used. The qubit is an information unit of the quantum calculation. Hereinafter, a quantum circuit that implements the Shor's algorithm is simply referred to as a "quantum circuit". The quantum circuit includes a wire and a quantum gate. The quantum gate is an arithmetic operation element that performs an operation of rewriting a state of the qubit. The quantum circuit is roughly divided into a portion that executes a modular exponentiation calculation and a portion that executes an inverse quantum Fourier transform ($QFT^{-1}$).

Since the quantum circuit performs an arithmetic operation by inputting the qubits representing a target number of the prime factorization and control qubits that control the prime factorization, a large number of qubits are used for the arithmetic operation. For example, in a case where the target number is L bits, the number of control qubits is 2L + 1. Accordingly, a technology has been proposed in which the number of control qubits to be used is set to one by using a measurement and classical conditional arithmetic operation as the arithmetic operation of the inverse quantum Fourier transform. The inverse quantum Fourier transform using this measurement and classical conditional arithmetic operation is referred to as a semiclassical $QFT^{-1}$. A method for performing the arithmetic operation of the Shor's algorithm using this semiclassical $QFT^{-1}$ is referred to as a 1 controlling qubit trick.

For the quantum circuit, the number of arithmetic operations arranged in series in a case where arithmetic operations that may be executed simultaneously are executed in parallel is referred to as a "circuit depth". Since an execution time of the prime factorization increases as this circuit depth increases, the circuit depth is greatly related to the execution time.

International Publication Pamphlet No. WO 2022/249963 is disclosed as related art.

SUMMARY

TECHNICAL PROBLEM

However, the number of control qubits used in the Shor's algorithm in the related art is 2L + 1 which is the maximum or 1 which is the minimum, and it has not been studied so much to suppress the circuit depth to be small by using an intermediate value therebetween. With respect to this point, a time taken for each unit which is a collection of quantum gates that perform modular exponentiation calculations and a time taken for a measurement and classical conditional arithmetic operation vary depending on an architecture. Therefore, in a case where the qubits as a whole are excessive, there is a possibility that the circuit depth is reduced by not using the 1 controlling qubit trick, and it is difficult for the quantum circuit of the related art to reduce the execution time of the arithmetic operation of the prime factorization.

The disclosed technology is made in view of the foregoing, and aims to provide a computer-readable recording medium storing an information processing program, an information processing method, and an information processing system that reduce an execution time of an arithmetic operation of prime factorization.

SOLUTION TO PROBLEM

According to an aspect of the embodiments, there is provided an information processing program comprising instructions which, when executed by a computer, cause the computer to execute processing comprising: determining a number of control qubits based on a relationship between a first arithmetic operation time taken for each of a plurality of kinds of modular exponentiation calculation processing in an arithmetic operation of prime factorization and a second arithmetic operation time taken for each of a plurality of measurement and classical conditional arithmetic operations included in inverse quantum Fourier transform processing on results of the plurality of kinds of modular exponentiation calculation processing in the arithmetic operation of the prime factorization; determining a circuit pattern for performing the arithmetic operation of the prime factorization by executing the plurality of kinds of modular exponentiation calculation processing and the inverse quantum Fourier transform processing, based on the determined number of control qubits;

generating a quantum circuit that executes the arithmetic operation of the prime factorization by using the determined circuit pattern; and performing the arithmetic operation of the prime factorization by using the quantum circuit.

ADVANTAGEOUS EFFECTS OF INVENTION

In one aspect, the execution time of the arithmetic operation of the prime factorization may be reduced.

BRIEF DESCRIPTION OF DRAWINGS

FIG. 1 is a block diagram of an information processing system that executes prime factorization using a Shor's algorithm;
FIG. 2 is a diagram illustrating a quantum circuit of the Shor's algorithm before the number of qubits is reduced;
FIG. 3 is a diagram of an example of a quantum circuit using a 1 controlling qubit trick;
FIG. 4 is a diagram illustrating a first circuit pattern;
FIG. 5 is a diagram illustrating an example of a quantum circuit using a semiclassical QFT$^{-1}$ in a case where a time taken for a unit of a modular exponentiation calculation is shorter than a time taken for a measurement and classical conditional arithmetic operation;
FIG. 6 is a diagram illustrating a circuit configuration of a t-th new semiclassical QFT$^{-1}$;
FIG. 7 is a diagram illustrating a second circuit pattern;
FIG. 8 is a flowchart of processing of generating a quantum circuit by a classical computer according to an embodiment; and
FIG. 9 is a hardware configuration diagram of the classical computer.

DESCRIPTION OF EMBODIMENTS

Hereinafter, embodiments of an information processing program, an information processing method, and an information processing system disclosed in the present application will be described in detail with reference to the drawings. The information processing program, the information processing method, and the information processing system disclosed in the present application are not limited by the following embodiments.

[First Embodiment]

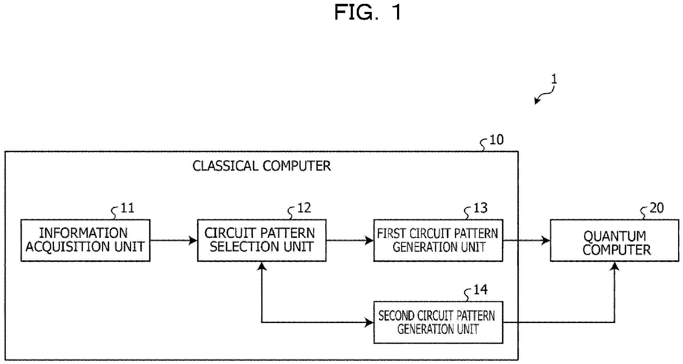

FIG. 1 is a block diagram of an information processing system that executes prime factorization using a Shor's algorithm. An information processing system 1 includes a classical computer 10 and a quantum computer 20. The classical computer 10 is coupled to the quantum computer 20.

The classical computer 10 generates a circuit pattern of a quantum circuit that executes the prime factorization using the Shor's algorithm. The classical computer 10 transmits the generated circuit pattern to the quantum computer 20, and the quantum circuit is generated.

Qubits will be described below. A state of one qubit is represented as a two-dimensional complex number vector. To clarify the qubits, a ket vector notation "|>" is used. For example, the qubits are represented by Expression (1) below. Hereinafter, n number of qubits are referred to as n qubits. A plurality of qubits are referred to as plural qubits. L-bit qubits are represented as $|0, \cdots, 0\rangle = |0^L\rangle$, for example, when all the qubits are 0.

$$|\psi\rangle = \begin{pmatrix} 1 \\ 2+i \end{pmatrix} \in \mathbb{C}^2 \qquad \cdots (1)$$

For example, a pair of one qubits represented by Expression (2) below is referred to as a standard basis. Coefficients $\alpha$ and $\beta$ which are complex numbers are present for a state $|\psi\rangle$ of one qubit, and the state is represented as $|\psi\rangle = \alpha|0\rangle + \beta|1\rangle$.

$$|0\rangle = \begin{pmatrix} 1 \\ 0 \end{pmatrix}, |1\rangle = \begin{pmatrix} 0 \\ 1 \end{pmatrix} \qquad \cdots (2)$$

States of the plural qubits are represented as a tensor product of the state of one qubit. For example, the states of the plural qubits are represented by Expression (3) below.

$$|\psi_1\rangle = \begin{pmatrix} \alpha_1 \\ \beta_1 \end{pmatrix}, |\psi_2\rangle = \begin{pmatrix} \alpha_2 \\ \beta_2 \end{pmatrix}$$

$$|\psi_1\rangle \otimes |\psi_2\rangle = |\psi_1\psi_2\rangle = \begin{pmatrix} \alpha_1 \\ \beta_1 \end{pmatrix} \otimes \begin{pmatrix} \alpha_2 \\ \beta_2 \end{pmatrix} = \begin{pmatrix} \alpha_1\alpha_2 \\ \alpha_1\beta_2 \\ \alpha_2\beta_1 \\ \beta_1\beta_2 \end{pmatrix} \qquad \cdots (3)$$

Next, quantum gates will be described. There are the quantum gates as follows. An X gate is a quantum gate that causes X represented by Expression (4) to act. When |0> is input to the X gate, |1> is output. When |1> is input to the X gate, |0> is output.

$$X = \begin{pmatrix} 0 & 1 \\ 1 & 0 \end{pmatrix} \qquad \cdots (4)$$

A CX gate is a quantum gate that causes CX represented by Expression (5) below to act. The CX gate acts on states of two qubits. The CX gate is a gate that executes a NOT gate on a second qubit when a first qubit is 1.

$$CX = \begin{pmatrix} 1 & 0 & 0 & 0 \\ 0 & 1 & 0 & 0 \\ 0 & 0 & 0 & 1 \\ 0 & 0 & 1 & 0 \end{pmatrix} \qquad \cdots (5)$$

A Hadamard gate is a quantum gate that causes H represented by Expression (6) to act. When |0> is input to the Hadamard gate, $(1/2^{1/2})$|0> + $(1/2^{1/2})$|1> is output. This output is also represented as |+>. When |1> is input to the Hadamard gate, $(1/2^{1/2})$|0> - $(1/2^{1/2})$| 1> is output.

$$H = \frac{1}{\sqrt{2}} \begin{pmatrix} 1 & 1 \\ 1 & -1 \end{pmatrix} \qquad \cdots (6)$$

Next, measurement will be described. In quantum calculation, a calculation result is obtained by an operation called measurement. As a result of the measurement, one of bases of the qubit is probabilistically obtained, and the state of that qubit is that basis. For example, for $(1/3^{1/2})$|0> + $(2^{1/2}/3^{1/2})$|1>, 0 is obtained with a probability of 1/3 and the qubit becomes |0>, and 1 is obtained with a probability of 2/3 and the qubit becomes |1> by the measurement.

An arithmetic operation of determining a content of the quantum gate to be acted based on the measurement result is referred to as a classical conditional arithmetic operation. For example, the classical conditional arithmetic operation is an arithmetic operation of causing the X gate to act when the measurement result is 1 and not causing the X gate to act and allowing the qubit to pass as it is when the measurement result is 0.

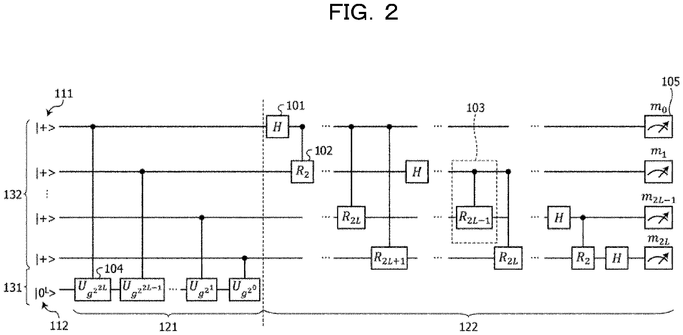

Next, the Shor's algorithm will be described. FIG. 2 is a diagram illustrating a quantum circuit of the Shor's algorithm before the number of qubits is reduced. The quantum circuit of the Shor's algorithm before the number of qubits is reduced is referred to as a "basic quantum circuit". The basic quantum circuit includes a modular exponentiation calculation unit 121 and an inverse quantum Fourier transform unit 122 illustrated in FIG. 2.

A quantum gate 101 in which "H" is written in a rectangular frame is a Hadamard gate. Quantum gates 102 in which "$R_j$ (j = 2, $\cdots$2L, 2L+1)" are written in rectangular frames are rotary gates. The rotary gates are each represented by a matrix represented by Expression (7) below.

$$R_j = \begin{bmatrix} 1 & 0 \\ 0 & e^{-2\pi i/2^j} \end{bmatrix} \qquad \cdots (7)$$

A quantum gate 103 is an example of a control rotary gate. In FIG. 2, the calculation proceeds in a right direction toward a paper surface. When a flow of each calculation is referred to as a system, the control rotary gate receives an input from another system like the quantum gate 103. A qubit input from another system corresponds to a first qubit in the control rotary gate, and a qubit input from the own system corresponds to a second qubit in the control rotary gate. Units 104 in

which " $U_i$ (i = $\hat{g}(2^0)$, $\hat{g}(2^1)$, $\cdots$, $\hat{g}(2^{2L})$ " ("^" indicates exponentiation) are written in rectangular frames are arithmetic operation circuits that perform modular exponentiation calculations, and include a plurality of quantum gates. Units 105 are circuits that perform measurements on input arithmetic operation results to confirm calculation results and then store the confirmed calculation results.

The basic quantum circuit includes the modular exponentiation calculation unit 121 and the inverse quantum Fourier transform unit 122. An L qubit 131 representing the L-digit target number which is a target of the prime factorization and a control qubit group 132 including (2L+1) number of control qubits 111 for controlling an arithmetic operation are input to the basic quantum circuit. The L qubit 131 is a qubit 112. Quantum states of the control qubits 111 and the qubit 112 are retained in respective registers.

The modular exponentiation calculation unit 121 causes the individual units 104 to which the respective control qubits 111 are input to act on the input qubit 112, and performs modular exponentiation calculations. $U_i$ acted by the unit 104 is a quantum circuit that performs multiplication of $\hat{g}(2^k)$ and performs (mod N) on a multiplication result.

The modular exponentiation calculation will be described below. In the modular exponentiation calculation, for example, the following processing is performed. Input $|0^w\rangle$ is set to 1 by the action of the X gate at a lowermost digit and is set to $|0, \cdots, 0, 1\rangle$. Subsequently, for $|0, \cdots, 0, 1\rangle$, when a control bit $x_{v-1}$ is 1 for $\hat{U}(2^{(v-1)})$, this acts on the input and becomes $|\hat{g}(x_{v-1}2^{(v-1)})\mod N\rangle$. The superposition of all the modular exponentiation calculations is created, and thus, a result represented by Expression (8) below is calculated.

$$\left| g^{\sum_{h=0}^{v-1} x_h 2^h} \bmod N \right\rangle \qquad \cdots (8)$$

The inverse quantum Fourier transform unit 122 causes the quantum gate 101 which is the Hadamard gate and the quantum gate 103 which is the control rotary gate to act on the individual control qubits 111, and performs an inverse quantum Fourier transform.

In the inverse quantum Fourier transform, phases may be extracted. For example, the quantum states in the individual systems of the inverse quantum Fourier transform unit 122 are $|0\rangle + e^{2\pi i 0 \cdot jv}|1\rangle$, $|0\rangle + e^{2\pi i 0.jv-1jv}|1\rangle$, $\cdots$, $|0\rangle + e^{2\pi i 0.j2\cdots jv-1jv}|1\rangle$, $|0\rangle + e^{2\pi i 0.j1j2\cdots jv-1jv}|1\rangle$ in order from the top toward the paper surface. When the Hadamard gate acts on $|0\rangle + e^{2\pi i 0.jv}|1\rangle$ which is a quantum state of an uppermost system, $|jv\rangle$ is obtained. When $R_2$ acts on $|0\rangle + e^{2\pi i 0.jv-1jv}|1\rangle$, $|0\rangle + e^{2\pi i 0.jv-1}|1\rangle$ is obtained, and when the Hadamard gate further acts, $|jv - 1\rangle$ is obtained. In this manner, in the inverse quantum Fourier transform, the digits are sequentially deleted from the lowest digit. As a result, outputs are $|jv\rangle$, $|jv-1\rangle$, $\cdots$, $|j2\rangle$, and $|j1\rangle$, respectively.

Thereafter, in the basic quantum circuit, the units 105 perform measurements on respective outputs to confirm calculation results, and the confirmed calculation results are stored in the units 105.

Final processing of the prime factorization using the modular exponentiation calculation and the inverse quantum Fourier transform will be described. A case where the superposition of all the modular exponentiation calculations is represented by Expression (9) below will be described.

$$\sum_{j=0}^{2^v-1} |j\rangle \left| g^j \bmod N \right\rangle \qquad \cdots (9)$$

When Expression (10) below is substituted into Expression (9), Expression (11) is obtained.

$$|u_s\rangle = \sum_{k=0}^{q-1} e^{-2\pi i s k/q} \left| g^k \bmod N \right\rangle \qquad \cdots (10)$$

$$\sum_{s=0}^{q-1}\sum_{j=0}^{2^v-1} e^{2\pi i s j/q}|j\rangle|u_s\rangle \qquad \cdots(11)$$

When the inverse quantum Fourier transform is performed on Expression (11), Expression (12) is obtained.

$$\sum_{s=0}^{q-1}|s/q\rangle|u_s\rangle \qquad \cdots(12)$$

|s/q> in Expression (12) is a v-bit approximate value of a multiple of 1/q. In this manner, the multiple of 1/q is obtained from the phase.

q that satisfies gq = 1 mod N is searched for by setting the v-bit approximate value of the multiple of 1/q to (s/q)~ and executing continued fraction expansion as in Expression (13) below, and thus, gcd(gq/2±1, N) is obtained as a solution of the prime factorization.

$$(S/q)^{\sim} = \cfrac{1}{a_1 + \cfrac{1}{a_2 + \cfrac{1}{\cdots + \cfrac{1}{a_M}}}} \qquad \cdots(13)$$

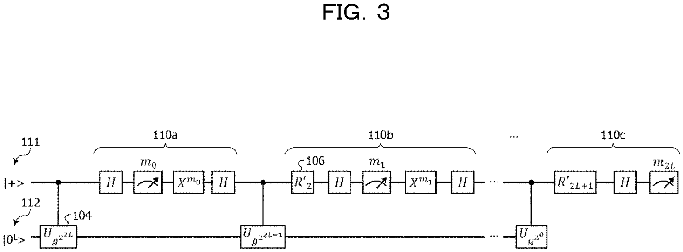

Subsequently, a quantum circuit using 1 controlling qubit trick will be described. FIG. 3 is a diagram of an example of the quantum circuit using the 1 controlling qubit trick. In the quantum circuit using the 1 controlling qubit trick, quantum circuits 110 that perform measurement and classical conditional arithmetic operations are interposed between inputs to the respective units 104 of the systems that calculate the control qubits 111. A quantum circuit 110a in which a Hadamard gate, a classical conditional arithmetic operation, and a Hadamard gate are sequentially arranged is disposed between a first unit 104 and a next unit 104. A quantum circuit 110b in which a quantum gate 106 that causes R'$_j$ (j = 2, 3, $\cdots$, 2L) to act, a Hadamard gate, a classical conditional arithmetic operation, and a Hadamard gate are sequentially arranged is disposed between units 104 subsequent to the next unit 104 of the first unit 104. R'$_j$ is represented by Expression (14) below.

$$R'_j = \begin{bmatrix} 1 & 0 \\ 0 & e^{-2\pi i \sum_{l=2}^{j} m_{j-l}/2^l} \end{bmatrix} \qquad \cdots(14)$$

A quantum circuit 110c in which a quantum gate that causes R'$_{2L}$ to act, a Hadamard gate, and a measurement unit are sequentially arranged is disposed after a last unit 104. The inverse quantum Fourier transform illustrated in FIG. 3 is semiclassical QFT$^{-1}$.

A time taken for the arithmetic operation of each unit 104 of the modular exponentiation calculation and a time taken for the measurement and classical conditional arithmetic operation vary depending on an architecture. In a case where the qubits as a whole are excessive, there is a possibility that a circuit depth is reduced by not using the 1 controlling qubit trick. Accordingly, the classical computer 10 according to the present embodiment determines a configuration of the quantum circuit as follows.

Hereinafter, processing of generating a circuit pattern of a quantum circuit by the classical computer 10 will be described with reference to FIG. 1. As illustrated in FIG. 1, the classical computer 10 includes an information acquisition unit 11, a circuit pattern selection unit 12, a first circuit pattern generation unit 13, and a second circuit pattern generation unit 14.

The information acquisition unit 11 receives an input of information on an algorithm used for the modular exponentiation calculation and an algorithm used for the inverse quantum Fourier transform. For example, the information acquisition unit 11 acquires information on an algorithm used for the modular exponentiation calculation and an algorithm used for the inverse quantum Fourier transform, which is input by an operator by using an input device (not illustrated).

Subsequently, the information acquisition unit 11 acquires times taken for the respective units 104 used for the modular exponentiation calculations corresponding to the algorithm used for the modular exponentiation calculations. The information acquisition unit 11 acquires times taken for the respective measurement and classical conditional arithmetic operations indicated by the quantum circuits 110 corresponding to the algorithm used for the inverse quantum Fourier transforms. Thereafter, the information acquisition unit 11 outputs the times taken for the respective units 104 and the times taken for the respective measurement and classical conditional arithmetic operations to the circuit pattern selection unit 12.

The times taken for the respective arithmetic operations by the units 104 and the times taken for the respective measurement and classical conditional arithmetic operations may be calculated as follows. The circuit depth of the modular exponentiation calculation may be estimated by using a preceding study (for example, see Junpei Yamaguchi et al., "Estimation of Shor's Circuit for 2048-bit Integers based on Quantum Simulator", 2023). Since a time taken for each gate varies depending on the quantum computer 20 to be used, a time taken for each quantum gate may be actually measured and then estimated by using the above-described preceding study.

The times taken for the respective measurement and classical conditional arithmetic operations also vary depending on the quantum computer 20. Accordingly, the times taken for the respective measurement and classical conditional arithmetic operations may be calculated by executing measurements in the quantum computer 20 and actually measuring times taken for executions of gate operations by using results of the measurements.

The times taken for the respective arithmetic operations by the units 104 and the times taken for the respective measurement and classical conditional arithmetic operations may be calculated by the operator and input to the information acquisition unit 11, or may be calculated by the information acquisition unit 11.

The circuit pattern selection unit 12 receives an input of the times taken for the respective arithmetic operations by the units 104 and the times taken for the respective measurement and classical conditional arithmetic operations. Subsequently, the circuit pattern selection unit 12 determines whether or not a shortest time among the times taken for the respective arithmetic operations by the units 104 is longer than or equal to a longest time among the times taken for the respective measurement and classical conditional arithmetic operations. Hereinafter, the times taken for the respective arithmetic operations by the unit 104 are simply referred to as "modular exponentiation calculation times", and the times taken for the respective measurement and classical conditional arithmetic operations are simply referred to as "measurement and classical conditional arithmetic operation times". This modular exponentiation calculation time is an example of a "first arithmetic operation time taken for each of a plurality of modular exponentiation calculations included in modular exponentiation calculation processing in an arithmetic operation of prime factorization". The measurement and classical conditional arithmetic operation time is an example of a "second arithmetic operation time taken for each of a plurality of measurement and classical conditional arithmetic operations included in inverse quantum Fourier transform processing on results of the modular exponentiation calculations in the arithmetic operation of the prime factorization".

In a case where the modular exponentiation calculation time is longer than or equal to the measurement and classical conditional arithmetic operation time, the circuit pattern selection unit 12 determines that the number of control qubits is 2. Hereinafter, the number of control qubits to be used is represented by k.

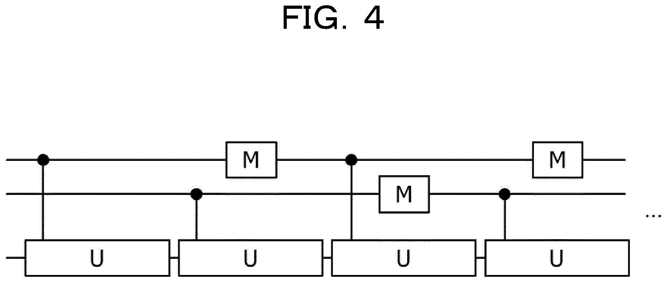

FIG. 4 is a diagram illustrating a first circuit pattern. When the arithmetic operation times are studied, since dominant times in the quantum circuit are the modular exponentiation calculation time and the measurement and classical conditional arithmetic operation time, the quantum circuit is presented by using the respective times in FIG. 4. In FIG. 4, U represents the modular exponentiation calculation time. M represents the measurement and classical conditional arithmetic operation time.

In a case where the modular exponentiation calculation time is longer than or equal to the measurement and classical conditional arithmetic operation time, if all the measurement and classical conditional arithmetic operations other than the last one are completed before the modular exponentiation calculations by all the units 104 are ended as in the first circuit pattern illustrated in FIG. 4, the time may be minimized. In a case where the modular exponentiation calculation time is longer than or equal to the measurement and classical conditional arithmetic operation time, as long as k, which is the number of control qubits, is 2 or more, the same time is taken regardless of a value of k. Since the smaller number of control qubits is desirable, k is preferably set to 2. Accordingly, the circuit pattern selection unit 12 sets the number of control qubits k to 2. This example is an example of "processing of setting the number of control qubits to 2".

The reason why k is not set to 3 or more in this case will be described. Since any U and any M may not be performed simultaneously, the circuit depth of the quantum circuit using the 1 controlling qubit trick in the case of k = 1 is $(2L + 1)(M + U)$ when the circuit depth is represented by a time to spend. By contrast, in the case of k = 2, since all M other than a last M may be ended during the calculation of U, the circuit depth is $(2L + 1)U + M$. When k is set to 3 or more, since all U are executed by L qubits, the circuit depth is at least $(2L + 1)U$ or more. Since the last M is further added, the circuit depth is eventually $(2L + 1)U + M$. In this manner, even when k is set to 3 or more, since the circuit depth is the same as that of k = 2, k = 2, which uses the fewest qubits, is selected. The circuit pattern selection unit 12 selects the first circuit pattern which is a pattern of the quantum circuit using two control qubits. This processing of selecting the first circuit pattern corresponds to an example of "processing of determining that a circuit pattern is the first circuit pattern in which the measurement and classical conditional arithmetic operation is executed in parallel with sequential execution of the plurality of modular exponentiation calculations by using two control qubits".

Thereafter, the circuit pattern selection unit 12 notifies the first circuit pattern generation unit 13 of k = 2, which is the number of control qubits, and instructs the first circuit pattern generation unit 13 to generate the first circuit pattern. The circuit depth of the first circuit pattern is $(2L + 1)U + M$ as described above.

In a case where the time taken for the unit 104 is shorter than the time taken for the measurement and classical conditional arithmetic operation, the circuit pattern selection unit 12 sets the number of control qubits to $k > (2L + 1)/((1 - a)2L + 1)$.

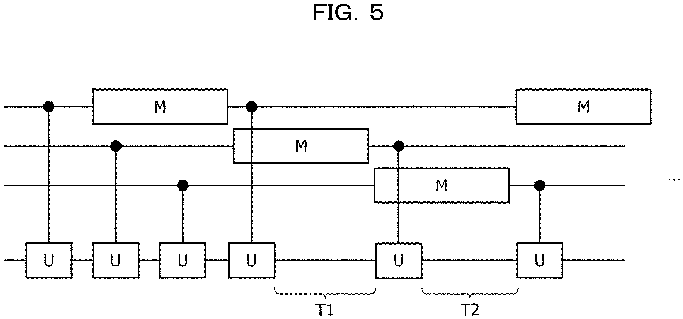

FIG. 5 is a diagram illustrating an example of a quantum circuit using the semiclassical $QFT^{-1}$ in a case where the time taken for the unit of the modular exponentiation calculation is shorter than the time taken for the measurement and classical conditional arithmetic operation. In a case where the time taken for the unit 104 is shorter than the time taken for the measurement and classical conditional arithmetic operation, when the semiclassical $QFT^{-1}$ is used, a long waiting time for the measurement and classical conditional arithmetic operation occurs. For example, in FIG. 5, times T1 and T2 are waiting times. The circuit depth in this case is $U + (2L + 1)M$.

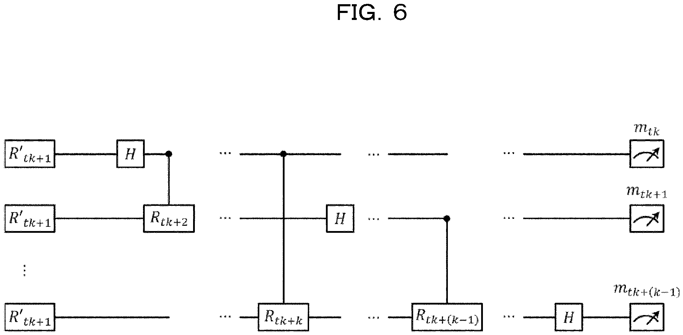

The circuit pattern selection unit 12 uses the quantum circuit as a quantum circuit by using a newly defined inverse quantum Fourier transform to be described below. FIG. 6 is a diagram illustrating a circuit configuration of a t-th new semiclassical $QFT^{-1}$. t is a subscript indicating a number from a head in the quantum circuit of the Shor's algorithm, and is 0, 1, and $\cdots$. Hereinafter, the newly defined inverse quantum Fourier transform illustrated in the circuit of FIG. 6 is referred to as a new semiclassical $QFT^{-1}$.

As illustrated in FIG. 6, the new semiclassical $QFT^{-1}$ has systems of numbers 0 to k-1. k corresponds to each of integers equal to or greater than 1, and the systems each include quantum gates that cause $R'_{tk+k}$, $R'_{tk+(k-1)}$, $\cdots$, $R'_{tk+1}$ to act and an Hadamard gate.

While the circuit depth of the $QFT^{-1}$ in the normal Shor's algorithm is $O(L^2)$, the circuit depth of the new semiclassical $QFF^{-1}$ illustrated in FIG. 6 is $O(k^2) + M$. Both the circuit depths coincide with each other in the case of $k = 2L + 1$. For example, the circuit depth of a QFT circuit may be proportional to the square of the number of bits.

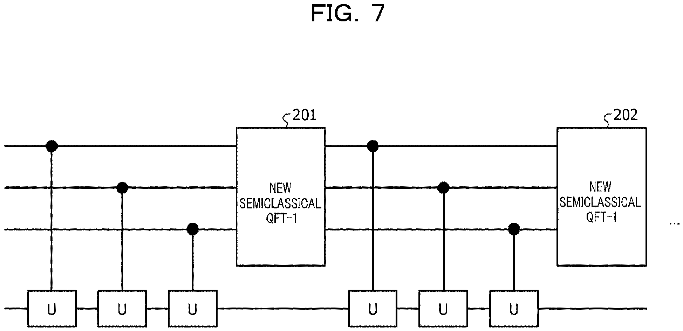

FIG. 7 is a diagram illustrating a second circuit pattern. In the second circuit pattern, as illustrated in FIG. 7, whenever three or more control qubits are used and the arithmetic operation of the units 104 corresponding to the respective control qubits is performed, new semiclassical $QFT^{-1}$ illustrated with units 201 and 202 are executed. The unit 201 is the new semiclassical $QFT^{-1}$ at $t = 0$. The unit 202 is the new semiclassical $QFT^{-1}$ at $t = 1$.

It is assumed that k is sufficiently less than L. Since L is generally a very large number, this condition is a condition satisfied in many cases. In this case, a circuit depth of the second circuit pattern using the new semiclassical $QFT^{-1}$ is $(2L + 1)(U + (1/k)M)$.

When $U = aM$ ($0 < a < 1$), a circuit depth in a case where the semiclassical $QFT^{-1}$ illustrated in FIG. 5 is used is $(a + 2L + 1)M$. The circuit depth of the second circuit pattern using the new semiclassical $QFT^{-1}$ illustrated in FIG. 7 is $(2L + 1)(a + (1/k))M$. When the above two cases are compared, the circuit depth of the second circuit pattern using the new semiclassical $QFT^{-1}$ in the case of $k > (2L + 1)/((1 - a)2L + 1)$ is less than the circuit depth in a case where the semiclassical $QFT^{-1}$ is used.

Accordingly, the circuit pattern selection unit 12 sets the number of control qubits as $k > (2L + 1)/((1 - a)2L + 1)$, and the circuit pattern selection unit 12 sets a value in a case where k is increased as much as the qubits allow as the number of control qubits. The circuit pattern selection unit 12 selects the second circuit pattern as the pattern of the quantum circuit using the set number of control qubits.

This setting of the number of control qubits corresponds to an example of "processing of setting the number of control qubits to a number greater than a predetermined number based on a number of bits used to express a number to be set as a target of the prime factorization and a constant calculated from a relationship between the first arithmetic operation time and the second arithmetic operation time". a is an example of "a constant that represents a ratio between the first arithmetic operation time and the second arithmetic operation time". $(2L + 1)/((1 - a)2L + 1)$ is an example of "the predetermined number based on the constant calculated from the relationship between the first arithmetic operation time and the second arithmetic operation time". The selection of the second circuit pattern corresponds to an example of "processing of determining that the circuit pattern is a second circuit pattern in which a predetermined quantum circuit that includes a Hadamard gate, a rotary gate, and a measurement unit is disposed between the modular exponentiation calculations that correspond to the number of control qubits".

Thereafter, the circuit pattern selection unit 12 notifies the second circuit pattern generation unit 14 of the number of control qubits as a largest k that may satisfy $k > (2L + 1)/((1 - a)2L + 1)$, and instructs the second circuit pattern generation unit 14 to generate the second circuit pattern.

Thereafter, in a case where the circuit pattern selection unit 12 receives a notification that it is difficult to generate the second circuit pattern from the second circuit pattern generation unit 14, the circuit pattern selection unit 12 cancels the second circuit pattern and the number of control qubits to be used. The circuit pattern selection unit 12 sets the number of control qubits to $k = 2$. The circuit pattern selection unit 12 notifies the first circuit pattern generation unit 13 that the number of control qubits is $k = 2$ and instructs the first circuit pattern generation unit 13 to generate the first circuit pattern.

As described above, the circuit pattern selection unit 12 determines the number of control qubits that minimizes an execution time of the arithmetic operation of the prime factorization based on the relationship between the first arithmetic operation time and the second arithmetic operation time. Based on the determined number of control qubits, the circuit pattern selection unit 12 executes the modular exponentiation calculation processing and the inverse quantum Fourier transform processing to determine a circuit pattern for performing the arithmetic operation of the prime factorization.

With the number k of control qubits set to 2, the first circuit pattern generation unit 13 receives, from the circuit pattern selection unit 12, an instruction to generate the first circuit pattern. The first circuit pattern generation unit 13 transmits information on the first circuit pattern illustrated in FIG. 4 to the quantum computer 20. For example, the first circuit pattern generation unit 13 transmits the number of qubits and a list of quantum gates to be used for a quantum circuit to be executed by the quantum computer 20. Consequently, a quantum circuit having the first circuit pattern is generated in the quantum computer 20.

For example, the first circuit pattern generation unit 13 transmits the number of qubits as k + L + the number of auxiliary bits used for the modular exponentiation calculation. In the case of the first circuit pattern, k = 2. By contrast, the number of auxiliary bits used for the modular exponentiation calculation varies depending on the algorithm. For example, in a case where Q-ADD is used as an addition method in the modular exponentiation calculation, the number of auxiliary bits used for the modular exponentiation calculation is L + 2 bits.

The first circuit pattern generation unit 13 generates, as the list of quantum gates, a list as follows, for example, and transmits the list to the quantum computer 20. The first circuit pattern generation unit 13 disposes a Hadamard gate in a first control qubit, a Hadamard gate in a second control qubit, and an X gate used in the modular exponentiation calculation in a last bit of a register at the beginning of the list. For example, in a case where Q-ADD is adopted, the first circuit pattern generation unit 13 sequentially adds a list of gates for executing Q-ADD by using the first control qubit as the control bit. Subsequently, the first circuit pattern generation unit 13 measures the first control qubit and executes an $\hat{X}m$ gate for a measurement result m. Subsequently, the first circuit pattern generation unit 13 disposes, in parallel, each list of gates for executing Q-ADD by causing the Hadamard gate to act and using the second control qubit as the control bit, and adds the gates to the list. As described above, specific gates are sequentially added to the list, and thus, the first circuit pattern generation unit 13 generates the list of quantum gates.

As specific circuit contents, the first circuit pattern generation unit 13 generates the following quantum circuit for the quantum computer 20. First, the first circuit pattern generation unit 13 prepares two qubits of |+> and |+> as the control qubits, and sets these control qubits as a 0-th control qubit and a first control qubit, respectively. The first circuit pattern generation unit 13 prepares $|0^L>$ as a target register of the prime factorization.

The first circuit pattern generation unit 13 causes the X gate to act on a bit at an end of the target register, and creates a quantum circuit such that the target register becomes |0⋯01>. Subsequently, for |0⋯01> which is the target register, the first circuit pattern generation unit 13 creates a quantum circuit such that following first processing for a first pattern and second processing for the first pattern are repeated up to h = 0, 1, ⋯, L-1.

The first processing for the first pattern is the following processing. First, $U_{\hat{g}(2^{(2L - 2h)})}$ is caused to act on the target register with the 0-th control qubit as the control qubit. In a case where h is greater than 0, after $U_{\hat{g}(2^{-(2h-1)+1})}$ by the first control qubit is ended, $U_{\hat{g}(2^{(2L - 2h)})}$ is caused to act on the target register by using the 0-th control qubit as the control qubit. Subsequently, H which is the Hadamard gate is caused to act on the 0-th control qubit. In a case where H is greater than 0, $R_{2h+1}'$ is caused to act on the 0-th control qubit, and then H which is the Hadamard gate is caused to act on the 0-th control qubit. Measurement is performed, and a result of the measurement is stored in $m_{2h}$ which is a measurement unit. Thereafter, $X^{m2h}$ and H which is the Hadamard gate are caused to act on the 0-th control qubit.

The second processing for the first pattern is the following processing. First, after causing $U_{\hat{g}(2^{(2L - 2h)})}$ to act on the target register by using the 0-th control qubit as the control qubit is ended, $U_{\hat{g}(2^{(2L - (2h + 1))})}$ is caused to act on the target register by using the first control qubit as the control qubit. Thereafter, $R_{2h+2}'$ is caused to act on the first control qubit, and then H which is the Hadamard gate is caused to act on the first control qubit. Measurement is performed, and a result of the measurement is stored in $m_{2h+1}$ which is a measurement unit. Thereafter, $X^{m2h+1}$ and H which is the Hadamard gate are caused to act on the first control qubit.

Finally, the first circuit pattern generation unit 13 sets h = L and creates a quantum circuit so as to execute the first processing for the first pattern. However, the first circuit pattern generation unit 13 omits the action of a last $X^{m2h}$ and H which is the Hadamard gate on the 0-th control qubit.

With the number of control qubits as the largest k that may satisfy k > (2L + 1)/((1 - a)2L + 1), the second circuit pattern generation unit 14 receives, from the circuit pattern selection unit 12, an instruction to generate the second circuit pattern. The second circuit pattern generation unit 14 transmits, to the quantum computer 20, information on the second circuit pattern illustrated in FIG. 7 using the new semiclassical QFT$^{-1}$ illustrated in FIG. 6. For example, the second circuit pattern generation unit 14 transmits the number of qubits and the list of quantum gates to be used for a quantum circuit to be executed by the quantum computer 20. Consequently, the second circuit pattern generation unit 14 generates the quantum circuit having the second circuit pattern in the quantum computer 20.

As specific circuit contents, the second circuit pattern generation unit 14 generates the following quantum circuit of the new semiclassical QFT$^{-1}$ in the quantum computer 20. In the quantum circuit of the new semiclassical QFT$^{-1}$ to be described below, an initial value of t is 0, and t is sequentially added one by one from the front in the second circuit pattern.

The second circuit pattern generation unit 14 prepares k qubits, and the k qubits are sequentially set as 0-th, first, $\cdots$, and (k-1)-th qubits. In a case where t is greater than 0, the second circuit pattern generation unit 14 generates a quantum circuit such that $R'_{tk+1}$ acts on all the 0-th, first, $\cdots$, and (k-1)-th qubits.

The second circuit pattern generation unit 14 creates a quantum circuit such that following first processing for a second pattern and second processing for the second pattern are repeated up to h = 0, 1, $\cdots$, k.

In the first processing for the second pattern, H which is the Hadamard gate is caused to act on an h-th qubit. In a case where h is less than k, the second processing for the second pattern repeats the following processing until g = 1, 2, $\cdots$, k-h-1. For example, a quantum circuit is created such that $R_{tk+g+1}$ acts on an (h+g)-th qubit by using the h-th qubit as a control qubit.

Thereafter, the second circuit pattern generation unit 14 creates a quantum circuit so as to measure all the 0-th, first, $\cdots$, and (k-1)-th qubits and store respective results thereof in $m_{tk}$, $m_{tk+1}$, $\cdots$, and $m_{tk+(k-1)}$.

When the second circuit pattern is generated, the second circuit pattern generation unit 14 determines whether or not the number of qubits in the quantum computer 20 is sufficient for the designated second circuit pattern. In a case where the number of qubits is insufficient, the circuit pattern selection unit 12 is notified that it is difficult to generate the second circuit pattern. By contrast, in a case where the number of qubits in the quantum computer 20 is sufficient for the designated second circuit pattern, the second circuit pattern generation unit 14 generates a quantum circuit of the second circuit pattern in the quantum computer 20, and ends the generation of the quantum circuit.

The quantum circuit created by the information processing system 1 according to the present embodiment will be collectively described. For example, in the case of U = 2M, since U is greater than or equal to M, the information processing system 1 generates a quantum circuit by using the first circuit pattern by setting the number of control qubits to k = 2. In this case, the circuit depth is reduced to U + (2L + 1)M = (2L + 3)M with respect to the circuit depth (2L + 1)(M + U) = 3(2L + 1)M of the quantum circuit using the 1 controlling qubit trick in the case of k = 1.

In the case of U = (1/2)M, since U is less than M, the information processing system 1 generates a quantum circuit by using the second circuit pattern with a maximum k satisfying k > (2L + 1)/(L + 1) = 2 as the number of control qubits. In this case, with respect to the circuit depth (2L + 1)(M + U) = (3/2)(2L + 1)M of the quantum circuit using the 1 controlling qubit trick in the case of k = 1, the circuit depth is reduced to (2L + 1)(U + (1/k)M) = (5/6)(2L + 1)M when k = 3.

In the case of U = (2/3)M, since U is less than M, the information processing system 1 generates a quantum circuit by using the second circuit pattern with the maximum k satisfying k > (6L + 3)/(2L + 3) = 3 as the number of control qubits. In this case, with respect to the circuit depth (2L + 1)(M + U) = (5/3)(2L + 1)M of the quantum circuit using the 1 controlling qubit trick in the case of k = 1, the circuit depth is reduced to (2L + 1)(U + (1/k)M) = (11/12)(2L + 1)M when k = 4.

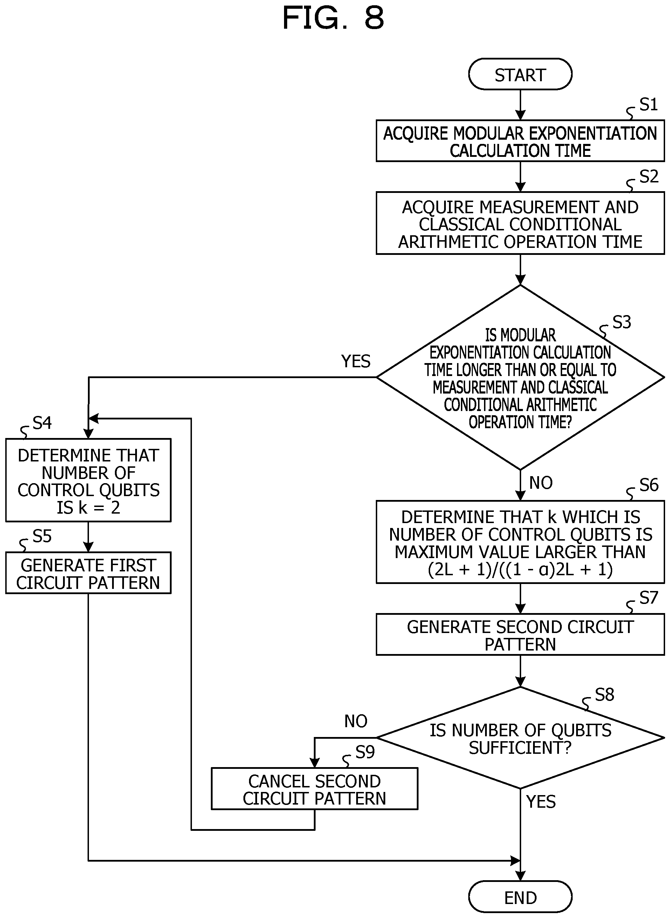

FIG. 8 is a flowchart of the processing of generating the quantum circuit by the classical computer according to the embodiment. Next, a flow of the processing of generating the quantum circuit by the classical computer 10 according to the embodiment will be described with reference to FIG. 8.

The information acquisition unit 11 receives the input of the information on the algorithm used for the modular exponentiation calculation. Subsequently, the information acquisition unit 11 acquires a modular exponentiation calculation time which is a time taken for each of the units 104 used for the modular exponentiation calculation corresponding to the algorithm used for the modular exponentiation calculation (step S1).

The information acquisition unit 11 receives the input of the information on the algorithm used for the inverse quantum Fourier transform. Subsequently, the information acquisition unit 11 acquires the measurement and classical conditional arithmetic operation time corresponding to the algorithm used for the inverse quantum Fourier transform (step S2). Thereafter, the information acquisition unit 11 outputs the modular exponentiation calculation time and the measurement and classical conditional arithmetic operation time to the circuit pattern selection unit 12.

The circuit pattern selection unit 12 determines whether or not the modular exponentiation calculation time is longer than or equal to the measurement and classical conditional arithmetic operation time (step S3).

In a case where the modular exponentiation calculation time is longer than or equal to the measurement and classical conditional arithmetic operation time (step S3: Yes), the circuit pattern selection unit 12 determines that the number of control qubits is k = 2 (step S4). The circuit pattern selection unit 12 instructs the first circuit pattern generation unit 13 to generate the quantum circuit using the first circuit pattern in which the number k of control qubits is set to 2.

Upon receiving the instruction from the circuit pattern selection unit 12, the first circuit pattern generation unit 13 transmits, to the quantum computer 20, the information on the first circuit pattern in which the number of control qubits is k = 2 and causes the quantum computer 20 to generate the first circuit pattern (step S5).

On the other hand, in a case where the modular exponentiation calculation time is less than the measurement and classical conditional arithmetic operation time (step S3: No), the circuit pattern selection unit 12 determines that k which is the number of control qubits is a maximum value greater than (2L + 1)/((1 - a)2L + 1) (step S6). The circuit pattern selection unit 12 instructs the second circuit pattern generation unit 14 to generate the quantum circuit using the second circuit pattern in which the number of control qubits is set to the maximum value greater than $(2L + 1)/((1 - a)2L + 1)$.

Upon receiving the instruction from the circuit pattern selection unit 12, the second circuit pattern generation unit 14 transmits, to the quantum computer 20, the information on the second circuit pattern in which the number of control qubits is set to the maximum value greater than $(2L + 1)/((1 - a)2L + 1)$. Consequently, the second circuit pattern generation unit 14 causes the quantum computer 20 to generate the second circuit pattern (step S7).

When the quantum circuit of the second circuit pattern in which the number of control qubits is set to the maximum value greater than $(2L + 1)/((1 - a)2L + 1)$ is generated, the second circuit pattern generation unit 14 determines whether or not the number of qubits of the quantum computer 20 is sufficient (step S8).

In a case where the number of qubits is insufficient (step S8: No), the second circuit pattern generation unit 14 notifies the circuit pattern selection unit 12 that it is difficult to generate the quantum circuit of the second circuit pattern. The circuit pattern selection unit 12 cancels the second circuit pattern (step S9). Thereafter, the processing of generating the quantum circuit returns to step S4.

By contrast, in a case where the number of qubits is sufficient (step S8: Yes), the second circuit pattern generation unit 14 ends the processing of generating the quantum circuit in a state where the quantum computer 20 generates the quantum circuit of the second circuit pattern.

As described above, the classical computer according to the present embodiment determines the number of control qubits that minimizes the execution time of the arithmetic operation of the prime factorization and the circuit pattern from the relationship between the time taken for the modular exponentiation calculation and the time taken for the measurement and classical conditional arithmetic operation. By using the determined circuit pattern, the classical computer generates a quantum circuit that executes the arithmetic operation of the prime factorization in the quantum computer. Consequently, the execution time of the arithmetic operation of the prime factorization may be reduced. The execution time of the arithmetic operation of the prime factorization is shortened, and thus, it is possible to easily and reliably execute security check of encrypted communication or evaluation of cipher, and to improve the safety of the system.

(Hardware Configuration)

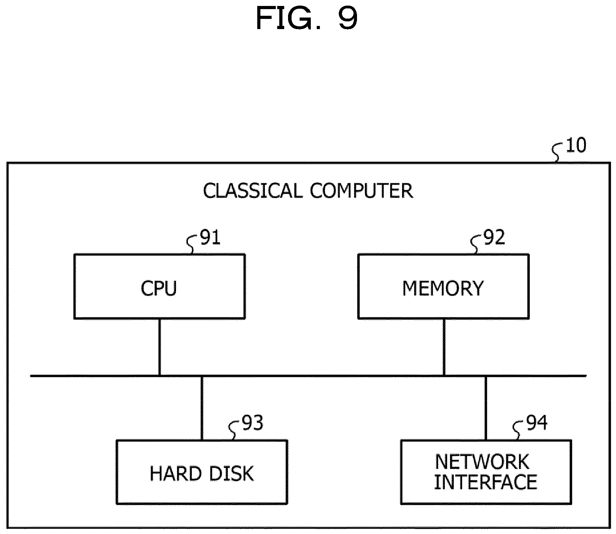

FIG. 9 is a hardware configuration diagram of the classical computer. Next, an example of a hardware configuration for implementing the individual functions of the classical computer 10 will be described with reference to FIG. 9.

As illustrated in FIG. 9, the classical computer 10 includes, for example, a central processing unit (CPU) 91, a memory 92, a hard disk 93, and a network interface 94. The CPU 91 is coupled to the memory 92, the hard disk 93, and the network interface 94 via a bus.

The network interface 94 is an interface for communication between the classical computer 10 and an external apparatus. The network interface 94 relays communication between the quantum computer 20 and the CPU 91, for example.

The hard disk 93 is an auxiliary storage device. The hard disk 93 stores various programs including programs for implementing functions of the information acquisition unit 11, the circuit pattern selection unit 12, the first circuit pattern generation unit 13, and the second circuit pattern generation unit 14 illustrated in FIG. 1.

The memory 92 is a main storage device. For example, a dynamic random-access memory (DRAM) may be used as the memory 92.

The CPU 91 reads the various programs from the hard disk 93, loads the programs onto the memory 92, and executes the programs. Consequently, the CPU 91 implements the functions of the information acquisition unit 11, the circuit pattern selection unit 12, the first circuit pattern generation unit 13, and the second circuit pattern generation unit 14 illustrated in FIG. 1.

## Claims

1. An information processing program comprising instructions which, when executed by a computer, cause the computer to execute processing comprising:

   determining a number of control qubits based on a relationship between a first arithmetic operation time taken for each of a plurality of kinds of modular exponentiation calculation processing in an arithmetic operation of prime factorization and a second arithmetic operation time taken for each of a plurality of measurement and classical conditional arithmetic operations included in inverse quantum Fourier transform processing on results of the plurality of kinds of modular exponentiation calculation processing in the arithmetic operation of the prime factorization;

determining a circuit pattern for performing the arithmetic operation of the prime factorization by executing the plurality of kinds of modular exponentiation calculation processing and the inverse quantum Fourier transform processing, based on the determined number of control qubits;

generating a quantum circuit that executes the arithmetic operation of the prime factorization by using the determined circuit pattern; and

performing the arithmetic operation of the prime factorization by using the quantum circuit.

2. The information processing program according to claim 1, wherein

in the determining of the number of control qubits, the number of control qubits is determined such that an execution time of the arithmetic operation of the prime factorization is minimized.

3. The information processing program according to claim 1 or claim 2, wherein

in a case where the first arithmetic operation time is longer than or equal to the second arithmetic operation time, the determining of the number of control qubits includes processing of setting the number of control qubits to 2, and

the determining of the circuit pattern includes processing of determining that the circuit pattern is a first circuit pattern in which the measurement and classical conditional arithmetic operations are executed in parallel with sequential execution of the plurality of kinds of modular exponentiation calculation processing by using two control qubits.

4. The information processing program according to any preceding claim, wherein

in a case where the first arithmetic operation time is less than the second arithmetic operation time, in the determining of the number of control qubits, the number of control qubits is set to a number greater than a predetermined number based on a number of bits used to express a number to be set as a target of the prime factorization and a constant calculated from a relationship between the first arithmetic operation time and the second arithmetic operation time, and

the determining of the circuit pattern includes processing of determining that the circuit pattern is a second circuit pattern in which a predetermined quantum circuit that includes a Hadamard gate, a rotary gate, and a measurement unit is disposed between the kinds of modular exponentiation calculation processing that correspond to the number of control qubits.

5. The information processing program according to claim 4, wherein

the determining of the number of control qubits includes
calculating a first number obtained by adding 1 to a number obtained by doubling the number of bits used to express the number to be set as the target of the prime factorization,
calculating a second number by using a constant that represents a ratio between the first arithmetic operation time and the second arithmetic operation time as the constant, multiplying a value obtained by subtracting the constant from 1 by a doubled value of the number of bits, and adding 1 to a multiplication result, and
calculating the predetermined number by dividing the first number by the second number.

6. An information processing method implemented by a computer, the information processing method comprising:

the computer determining a number of control qubits based on a relationship between a first arithmetic operation time taken for each of a plurality of kinds of modular exponentiation calculation processing in an arithmetic operation of prime factorization and a second arithmetic operation time taken for each of a plurality of measurement and classical conditional arithmetic operations included in inverse quantum Fourier transform processing on results of the plurality of kinds of modular exponentiation calculation processing in the arithmetic operation of the prime factorization;
the computer determining a circuit pattern for performing the arithmetic operation of the prime factorization by executing the plurality of kinds of modular exponentiation calculation processing and the inverse quantum Fourier transform processing, based on the determined number of control qubits;
the computer generating a quantum circuit that executes the arithmetic operation of the prime factorization by using the determined circuit pattern; and
the computer performing the arithmetic operation of the prime factorization by using the quantum circuit.

7. An information processing system comprising:

a classical computer; and
a quantum computer, wherein
the classical computer includes
a circuit pattern selection unit that determines a number of control qubits based on a relationship between a first arithmetic operation time taken for each of a plurality of kinds of modular exponentiation calculation processing in an arithmetic operation of prime factorization and a second arithmetic operation time taken for each of a plurality of measurement and classical conditional arithmetic operations included in inverse quantum Fourier transform processing on results of the plurality of kinds of modular exponentiation calculation processing in the arithmetic operation of the prime factorization, and determines a circuit pattern for performing the arithmetic operation of the prime factorization by executing the plurality of kinds of modular exponentiation calculation processing and the inverse quantum Fourier transform processing, based on the determined number of control qubits, and
a quantum circuit generation unit that generates, in the quantum computer, a quantum circuit that executes the arithmetic operation of the prime factorization by using the circuit pattern determined by using the number of control qubits determined by the circuit pattern selection unit, and
the quantum computer executes the arithmetic operation of the prime factorization by using the generated quantum circuit.

8. A non-transitory computer-readable recording medium comprising instructions which, when executed by a computer, cause the computer to execute processing comprising:

determining a number of control qubits based on a relationship between a first arithmetic operation time taken for each of a plurality of kinds of modular exponentiation calculation processing in an arithmetic operation of prime factorization and a second arithmetic operation time taken for each of a plurality of measurement and classical conditional arithmetic operations included in inverse quantum Fourier transform processing on results of the plurality of kinds of modular exponentiation calculation processing in the arithmetic operation of the prime factorization;
determining a circuit pattern for performing the arithmetic operation of the prime factorization by executing the plurality of kinds of modular exponentiation calculation processing and the inverse quantum Fourier transform processing, based on the determined number of control qubits;
generating a quantum circuit that executes the arithmetic operation of the prime factorization by using the determined circuit pattern; and
performing the arithmetic operation of the prime factorization by using the quantum circuit.

FIG. 1

EP 4 632 636 A1

FIG. 2

15

FIG. 3

# FIG. 4

FIG. 5

FIG. 6

FIG. 7

# FIG. 8

START

ACQUIRE MODULAR EXPONENTIATION CALCULATION TIME — S1

ACQUIRE MEASUREMENT AND CLASSICAL CONDITIONAL ARITHMETIC OPERATION TIME — S2

IS MODULAR EXPONENTIATION CALCULATION TIME LONGER THAN OR EQUAL TO MEASUREMENT AND CLASSICAL CONDITIONAL ARITHMETIC OPERATION TIME? — S3

YES

DETERMINE THAT NUMBER OF CONTROL QUBITS IS k = 2 — S4

GENERATE FIRST CIRCUIT PATTERN — S5

NO

DETERMINE THAT k WHICH IS NUMBER OF CONTROL QUBITS IS MAXIMUM VALUE LARGER THAN $(2L + 1)/((1 - \alpha)2L + 1)$ — S6

GENERATE SECOND CIRCUIT PATTERN — S7

IS NUMBER OF QUBITS SUFFICIENT? — S8

NO

CANCEL SECOND CIRCUIT PATTERN — S9

YES

END

# FIG. 9

Europäisches Patentamt

European Patent Office

Office européen des brevets

## EUROPEAN SEARCH REPORT

**Application Number**

EP 25 15 5603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J. Patrzyk et al: "A novel environment for simulation of quantum computing", Poster presented at the 2014 Cracow Grid Workshop (CGW'14), 27 October 2014 (2014-10-27), XP093288841, Retrieved from the Internet: URL:https://www.cyfronet.pl/cgw14/presentations/s4-16-p.pdf [retrieved on 2025-06-23] * sections "QuIDE User Interface" and "Simulation of Shor's Algorithm" * | 1-8 | INV. G06N10/60 G06N10/20 |
| A | P. NAJAFI ET AL: "Optimum phase estimation with two control qubits", AVS QUANTUM SCIENCE, vol. 5, 023802, 2 May 2023 (2023-05-02), XP012274352, DOI: 10.1116/5.0147954 * sections I and II.C * | 1-8 | |
| A | T. LUBINSKI ET AL: "Application-oriented performance benchmarks for quantum computing", ARXIV.ORG, CORNELL UNIVERSITY LIBRARY, 201 OLIN LIBRARY CORNELL UNIVERSITY ITHACA, NY 14853, 10 January 2023 (2023-01-10), XP091410842, DOI: 10.48550/arXiv.2110.03137 * sections V and A.8 * | 1-8 | **TECHNICAL FIELDS SEARCHED (IPC)** <br><br> G06N |
| A | J. YAMAGUCHI ET AL: "Experiments and resource analysis of Shor's factorization using a quantum simulator", LECTURE NOTES IN COMPUTER SCIENCE, vol. 14561, 8 March 2024 (2024-03-08), pages 119-139, XP047699243, DOI: 10.1007/978-981-97-1235-9_7 * sections 3 and 4 * | 1-8 | |

-/--

The present search report has been drawn up for all claims

| Place of search | Date of completion of the search | Examiner |
|---|---|---|
| The Hague | 26 June 2025 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 15 5603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | M. EKERA: "Revisiting Shor's quantum algorithm for computing general discrete logarithms", ARXIV.ORG, CORNELL UNIVERSITY LIBRARY, 201 OLIN LIBRARY CORNELL UNIVERSITY ITHACA, NY 14853, 6 March 2023 (2023-03-06), XP091452711, DOI: 10.48550/arXiv.1905.09084 * the whole document * | 1-8 | |

TECHNICAL FIELDS
SEARCHED (IPC)

The present search report has been drawn up for all claims

| Place of search | Date of completion of the search | Examiner |
|---|---|---|
| The Hague | 26 June 2025 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022249963 A

**Non-patent literature cited in the description**

- **JUNPEI YAMAGUCHI et al.** *Estimation of Shor's Circuit for 2048-bit Integers based on Quantum Simulator*, 2023